# EUROPÄISCHE PATENTSCHRIFT

(11) **EP 4 066 646 B1**
(45) Veröffentlichungstag und Bekanntmachung des Hinweises auf die Patenterteilung: **07.08.2024**
(21) Anmeldenummer: 22161526.3
(22) Anmeldetag: 11.03.2022
(51) Int. Cl.: A21C 5/00

(54) **TEIGPORTIONIERVORRICHTUNG**
DOUGH CONDITIONING DEVICE
DISPOSITIF DE DIVISION EN PORTIONS DE LA PÂTE

(30) Priorität: 31.03.2021 DE 102021108141
(43) Veröffentlichungstag der Anmeldung: 05.10.2022
(73) Patentinhaber: Fritsch Bakery Technologies GmbH & Co. KG, 97348 Markt Einersheim (DE)
(72) Erfinder: Bernhardt, Udo, 97346 Iphofen (DE)
(74) Vertreter: Grünecker Patent- und Rechtsanwälte PartG mbB

(56) Entgegenhaltungen:
- EP-B1- 3 066 928
- DE-T2- 69 704 058
- US-A- 5 395 229

## Beschreibung

Die Erfindung bezieht sich auf eine Teigportioniervorrichtung.

Aus dem Stand der Technik sind Vorrichtungen bekannt, die Portionen von Teig auf einem Förderband deponieren. Die EP 3 066 928 A1 offenbart z. B. eine Bäckereimaschinenanlage zum Fördern von Teig, die eine Portioniereinrichtung aufweist, welche durch sogenannte Sternwalzen einzelne Teigportionen abklemmt und auf eine Förderbandeinrichtung fallen lässt. Um zu verhindern, dass besonders fließfähige Teige über die Längsseitenkanten der Förderbandeinrichtung hinaus fließen, sind hocklappbare seitliche obere Lagen an Längsseitenkanten vorgesehen. Diese werden durch Stützmittel nach oben geklappt, um so einen muldenförmigen Querschnitt des Förderbands zu erreichen.

Aus der DE 10 2018 117 004 A1 ist eine weiterentwickelte Vorrichtung bekannt. Dort werden verschiedene Arten der Optimierung des Aufbaus des Förderbands beschrieben, die ein Klappen der Seitenbereiche verbessern sollen.

Aus der DE 697 04 058 T2 ist ein Verfahren zur Herstellung eines kernhaltigen Nahrungsmittels in Riegelform und ein dafür verwendbares Gerät bekannt. Dieses umfasst einen Bandförderer, auf dem ein flach ausgebreitetes Hautmaterial und ein stangenförmiges inneres Material befördert wird. Das Hautmaterial wird durch einen Außenhautformer flach ausgebreitet, bevor es an den Bandförderer übergeben wird. Das stangenförmige innere Material wird durch einen Extruder kontinuierlich auf das Hautmaterial aufgetragen.

Die US 5 395 229 A offenbart ein Bandschild für ein Band zum Formen von Bagels. Dort werden einzelne Teigstücke durch ein Band zu Teigringen geformt. Dazu werden einzelne Teigstücke zunächst durch eine Druckplatte in einen Strang gewirkt, welcher dann durch Biegen des Bands um einen Dorn in eine Ringform gebracht wird.

Beim Herabfallen der abgeklemmten Teigportionen können, insbesondere dann, wenn die einzelnen herabfallenden Portionen überlappen sollen, Probleme entstehen, welche einerseits den Produktionsablauf stören oder sogar unterbrechen können, und welche andererseits die Qualität des weitergeförderten Teigs verschlechtern können. Letzteres ist umso problematischer, als die Portionierung ganz am Anfang des Produktionsprozesses erfolgt und eine bereits hier erfolgte Verschlechterung der Teigqualität negative Auswirkungen auf den gesamten folgenden Produktionsprozess haben kann.

Es ist daher eine Aufgabe der Erfindung, eine verbesserte Teigportioniervorrichtung anzugeben. Diese Aufgabe wird erfindungsgemäß gelöst durch eine Teigportioniervorrichtung mit den Merkmalen des Anspruchs 1.

Die hier beschriebene Teigportioniervorrichtung umfasst eine Dosiervorrichtung mit einem Behälter, der zum Aufnehmen eines Teigvorrats konfiguriert ist, und einem Teiler, der zum Abtrennen einer definierten Menge Teig aus dem Teigvorrat und zum Auslassen der Teigmenge an einem Auslassende der Dosiervorrichtung in einer Auslassrichtung konfiguriert ist. Sie umfasst des Weiteren eine Fördervorrichtung, die zum Transportieren von Teig in einer Förderrichtung konfiguriert ist, ein Förderband umfasst und unterhalb des Auslassendes der Dosiervorrichtung angeordnet ist. Das Auslassende erstreckt sich in der Förderrichtung über eine Auslasslänge von einem stromaufwärtsseitigen Abschnitt zu einem stromabwärtsseitigen Abschnitt, wobei die Fördervorrichtung des Weiteren eine Bandführung aufweist, die dazu konfiguriert ist, seitliche Abschnitte des Förderbandes relativ zu einem mittleren Abschnitt in Richtung hin zur Dosiervorrichtung zu biegen. Die Teigportioniervorrichtung zeichnet sich dadurch aus, dass der mittlere Abschnitt des Förderbands zumindest in einem Abschnitt im Bereich der Dosiervorrichtung relativ zu dem Auslassende der Dosiervorrichtung ein Gefälle aufweist.

Insbesondere bei überlappend abgelegten Teigmengen kann das Gefälle des mittleren Abschnitts im Bereich der Dosiervorrichtung bewirken, dass ein Fallhöhenunterschied zwischen verschiedenen Teilstücken der Teigmenge verringert und/oder ausgeglichen werden kann, z. B. zwischen einem auf eine vorhergehende Portion abgelegten (d. h. überlappenden) Teilstück der Teigmenge und einem direkt auf dem Förderband, insbesondere auf dem mittleren Abschnitt des Förderbands, abgelegten Teilstück. Durch an der Dosiervorrichtung klebenbleibende Teilstücke der Teigmenge konnte es herkömmlich bei zu unterschiedlichen Fallhöhen dazu kommen, dass die abgelegte Teigmenge unerwünscht verdreht und/oder gefaltet wird. Dies konnte bei einem aus mehreren Teigmengen zu erzeugenden Teigband zu Inhomogenitäten führen, welche die Produktion erschweren und die Produktqualität mindern konnten. Unter anderem diese Probleme werden mit der Erfindung vermieden.

Als Auslassrichtung kann die Richtung angesehen werde, in der die Teigmenge sich aus der Dosiervorrichtung herausbewegt. Bei einem horizontal orientiertem Auslassende kann die Auslassrichtung z. B. im Wesentlichen vertikal und/oder quer, vorzugsweise senkrecht, zu dem Auslassende orientiert sein.

Es kann vorteilhaft sein, wenn das Auslassende im Wesentlichen horizontal orientiert ist. Auf diese Weise kann die Gravitation das Auslassen der Teigmenge am besten unterstützen. Es sind jedoch auch Ausführungen denkbar, in denen das Gefälle des mittleren Abschnitts des Förderbands relativ zu dem Auslassende dadurch erreicht wird, dass letzteres in einem Winkel zur Horizontalen angeordnet ist und/oder der mittlere Abschnitt des Förderbands horizontal orientiert ist.

Es ist vorstellbar, dass der mittlere Abschnitt einen entlang der Förderrichtung veränderlichen, in Auslassrichtung gemessenen Abstand von dem Auslassende aufweisen kann. Insbesondere in Fällen, in denen die abgelegte Teigmenge in Förderrichtung ein größeres Ausmaß aufweist als in einer Richtung quer, insbesondere senkrecht zu der Förderrichtung, kann ein Ausgleich der Fallhöhenunterschiede in dieser Richtung einen besonders vorteilhaften Effekt haben.

In einer Variante der Teigportioniervorrichtung können seitliche Ränder der seitlichen Abschnitte jeweils einen entlang der Förderrichtung im Wesentlichen konstanten in der Auslassrichtung gemessenen Abstand von dem Auslassende aufweisen. Insbesondere können die seitlichen Ränder des Förderbands parallel zu dem Auslassende orientiert sein. Dadurch kann besonders kleiner Spalt zwischen dem Förderband und dem Auslassende erreicht werden.

Denkbar wäre es, dass ein in der Auslassrichtung gemessener erster Abstand des mittleren Abschnitts von dem stromaufwärtsseitigen Abschnitt des Auslassendes kleiner ist als ein in der Auslassrichtung gemessener zweiter Abstand des mittleren Abschnitts von dem stromabwärtsseitigen Abschnitt des Auslassendes. Dadurch kann ein Fallhöhenunterschied zwischen verschiedenen Teilstücken der Teigmenge besonders effektiv ausgeglichen werden. Außerdem können Teigmengen mit einer derartigen Konfiguration besonders gut überlappend abgelegt und daraus ein kontinuierliches Teigband erzeugt werden.

Es kann vorteilhaft sein, wenn eine Differenz zwischen dem ersten Abstand und dem zweiten Abstand basierend auf einer Dicke der auf dem mittleren Abschnitt liegenden ausgelassenen Teigmenge eingestellt ist. Besonders günstig kann es sein, wenn eine Differenz zwischen dem ersten Abstand und dem zweiten Abstand im Wesentlichen einer Dicke der auf dem mittleren Abschnitt liegenden ausgelassenen Teigmenge entspricht. Dadurch kann erreicht werden, dass Fallhöhenunterschiede zwischen den verschiedenen Abschnitten der Teigmenge entlang der Förderrichtung so klein wie möglich gehalten werden und so ein sehr gleichmäßiges Ablegen der Teigmenge erfolgen kann, auch wenn sie mit einer vorher abgelegten Teigmenge überlappt.

Zweckmäßig kann es sein, wenn die seitlichen Abschnitte des Förderbands von einer Anfangsstellung in eine Endstellung klappbar sind und die Teigportioniervorrichtung derart konfiguriert ist, dass die seitlichen Abschnitte entlang der Auslasslänge des Auslassendes von der Anfangsstellung in die Endstellung gebogen/geklappt werden. Die kann beispielsweise der Fall sein, wenn das Klappen/Biegen der seitlichen Abschnitte an dem stromaufwärtsseitigen Abschnitt des Auslassendes eingeleitet wird. Auf diese Art kann der Abstand des mittleren Abschnitts des Förderbands von dem Auslassende weiter minimiert werden, denn der Abstand zwischen dem mittleren Abschnitt und dem Auslassende wird wesentlich durch die vertikale Erstreckung der seitlichen Abschnitte des Förderbands beeinflusst. Diese ist dort, wo das Klappen/Biegen eingeleitet wird, noch relativ gering. Daher kann an dieser Stelle der mittlere Abschnitt besonders nah am Auslassende angeordnet werden.

Die Anmeldung bezieht sich auf eine Teigportioniervorrichtung der vorstehend beschriebenen Art. Im Folgenden wird eine vorteilhafte Ausführungsform beispielhaft anhand von Zeichnungen erläutert.
Fig. 1 zeigt eine schematische seitliche Schnittansicht einer Teigportioniervorrichtung, wobei die Schnittebene parallel zu der Förderrichtung orientiert ist.
Fig. 2 zeigt eine schematische seitliche Schnittansicht einer Dosiervorrichtung der Teigportioniervorrichtung aus Fig. 1.
Fig. 3A zeigt eine schematische Schnittansicht der Dosiervorrichtung aus Fig. 2, wobei die Schnittebene senkrecht zu der Förderrichtung orientiert ist und deren Verlauf in Fig. 1 durch die Linie III-III angedeutet ist.
Fig. 3B zeigt die schematische Schnittansicht der Dosiervorrichtung aus Fig. 3A, wobei zusätzlich ein Förderband mit darauf liegenden Teigmengen gezeigt ist.
Fig. 3C zeigt eine Detailansicht des in Fig. 3B mit C angedeuteten Bereichs.
Fig. 4 zeigt eine der Fig. 1 ähnliche schematische seitliche Schnittansicht der Teigportioniervorrichtung, wobei zur besseren Übersichtlichkeit verschiedene Komponenten ausgeblendet sind und keine abgelegten Teigmengen gezeigt sind.
Fig. 5 zeigt eine schematische Perspektivansicht der Fördervorrichtung.

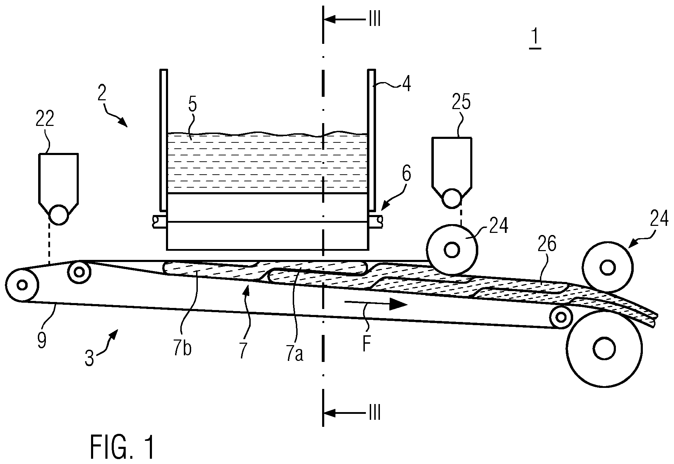

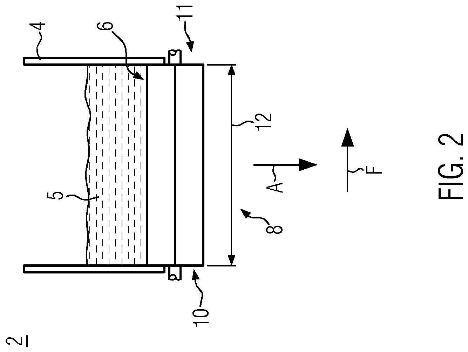

In Figur 1 ist eine perspektivische seitliche Schnittansicht einer Teigportioniervorrichtung 1 dargestellt. Die Teigportioniervorrichtung 1 kann eine Dosiervorrichtung 2 umfassen. Des Weiteren kann die Teigportioniervorrichtung 1 eine Fördervorrichtung 3 umfassen. Die Fördervorrichtung 3 kann zum Transportieren von Teig in einer Förderrichtung F konfiguriert sein. Die Dosiervorrichtung 2 kann einen Behälter 4 aufweisen. Der Behälter 4 kann zum Aufnehmen eines Teigvorrats 5 konfiguriert sein. Die Dosiervorrichtung 2 kann des Weiteren einen Teiler 6 umfassen, der zum Abtrennen einer definierten Teigmenge 7 aus dem Teigvorrat 5 konfiguriert sein kann. Der Teiler 6 kann des Weiteren zum Auslassen der Teigmenge 7 an einem Auslassende 8 (siehe Figur 2) der Dosiervorrichtung 2 in einer Auslassrichtung A konfiguriert sein. Die Fördervorrichtung 3 kann ein Förderband 9 umfassen. Wie in Figur 1 zu sehen, kann die Fördervorrichtung 3 unterhalb des Auslassendes 8 der Dosiervorrichtung 2 angeordnet sein.

In Figur 2 ist die Dosiervorrichtung 2 ohne die übrigen Komponenten der Teigportioniervorrichtung 1 in einer ähnlichen Ansicht wie in Figur 1 dargestellt. Es wird erkennbar, dass das Auslassende 8 einen stromaufwärtsseitigen Abschnitt 10 aufweisen kann. Des Weiteren kann das Auslassende 8 einen stromabwärtsseitigen Abschnitt 11 aufweisen. Das Auslassende 8 kann sich über eine Auslasslänge 12 von dem stromaufwärtsseitigen Abschnitt 10 zu dem stromabwärtsseitigen Abschnitt 11 erstrecken. Wie im vorliegenden Ausführungsbeispiel dargestellt, kann das Auslassende 8 im Wesentlichen horizontal orientiert sein. In einer solchen Konfiguration kann die Auslassrichtung A im Wesentlichen parallel zur Gravitation orientiert sein, was das Auslassen der Teigmengen 7 erleichtern kann.

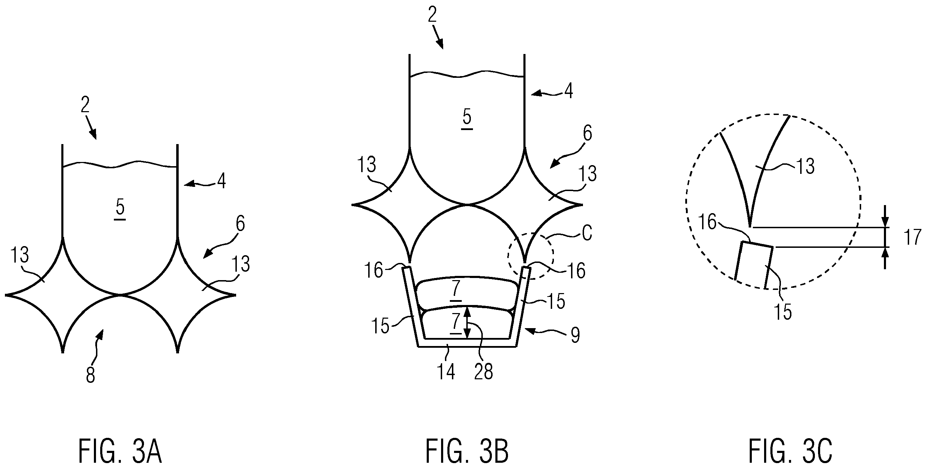

In Figur 3 ist die Dosiervorrichtung 2 in einer weiteren Schnittansicht dargestellt, wobei der Verlauf der Schnittebene in Figur 1 durch die Linie III-III angedeutet ist. Nun ist erkennbar, dass der Teiler 6 zwei Sternwalzen 13 umfassen kann. Durch gegenläufiges Rotieren der Sternwalzen 13 kann der Teiler 6 dazu konfiguriert sein, eine definierte Teigmenge 7 aus dem Teigvorrat 5 abzutrennen und am Auslassende 8 auszulassen. In Figur 3B sind zusätzlich zu den Darstellungen aus der Figur 3A zwei abgelegte Teigmengen 7 und das Förderband 9 dargestellt. Die Teigmengen 7 wurden überlappend auf dem Förderband 9 abgelegt. Des Weiteren ist zu erkennen, dass das Förderband 9 einen mittleren Abschnitt 14 aufweisen kann. Des Weiteren kann das Förderband 9 zwei seitliche Abschnitte 15 aufweisen. Die seitlichen Abschnitte 15 können relativ zu dem mittleren Abschnitt 14 klappbar und oder biegbar sein. Insbesondere können die seitlichen Abschnitte 15 relativ zu dem mittleren Abschnitt 14 in Richtung hin zu der Dosiervorrichtung 2 biegbar und oder klappbar sein. Die seitlichen Abschnitte 15 können jeweils einen seitlichen Rand 16 aufweisen. Wie in der Detailansicht in Figur 3C zu erkennen, können die seitlichen Ränder 16 in einem Randabstand 17 von dem Auslassende 8, insbesondere von einer unteren Kante der Sternwalzen 13 angeordnet sein.

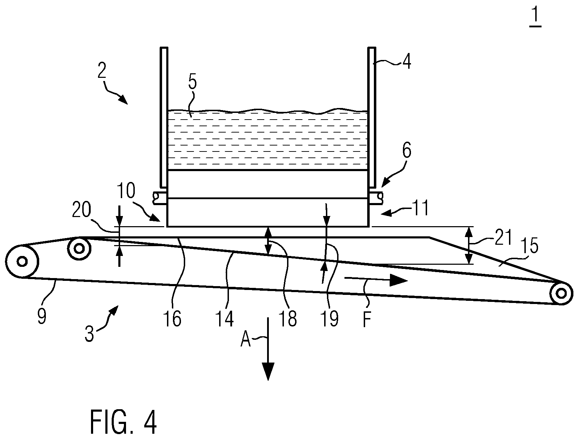

In Figur 4 ist die Teigportioniervorrichtung 1 in einer seitlichen Schnittansicht dargestellt, die der Ansicht aus Figur 1 ähnelt. Allerdings sind zur besseren Übersichtlichkeit nur die Dosiervorrichtung 2 und die Fördervorrichtung 3 dargestellt. Es ist zu erkennen, dass der mittlere Abschnitt 14 einen entlang der Förderrichtung F veränderlichen Abstand 18 von dem Auslassende 8 aufweisen kann. Der Abstand 18 kann insbesondere in der Auslassrichtung A gemessen werden. Der mittlere Abschnitt 14 kann im Bereich unterhalb der Dosiervorrichtung 2 relativ zu dem Auslassende 8 ein Gefälle 19 aufweisen. Insbesondere kann ein stromaufwärtiger Abstand 20 kleiner sein als ein stromabwärtiger Abstand 21. Der stromaufwärtige Abstand 20 kann in der Auslassrichtung A zwischen dem mittleren Abschnitt 14 und dem stromaufwärtsseitigen Abschnitt 10 des Auslassendes 8 definiert sein. Der stromabwärtige Abstand 21 kann in Auslassrichtung A zwischen dem mittleren Abschnitt 14 und dem stromabwärtsseitigen Abschnitt 11 des Auslassendes 8 definiert sein. In Figur 4 ist ebenfalls zu erkennen, dass der Randabstand 17 entlang der Auslasslänge 12 im Wesentlichen konstant sein kann. Dies kann dadurch unterstützt werden, dass die seitlichen Abschnitte 16 des Förderbands 9 entlang der Auslasslänge 12 des Auslassendes kontinuierlich in Richtung hin zur Dosiervorrichtung gebogen und oder geklappt werden.

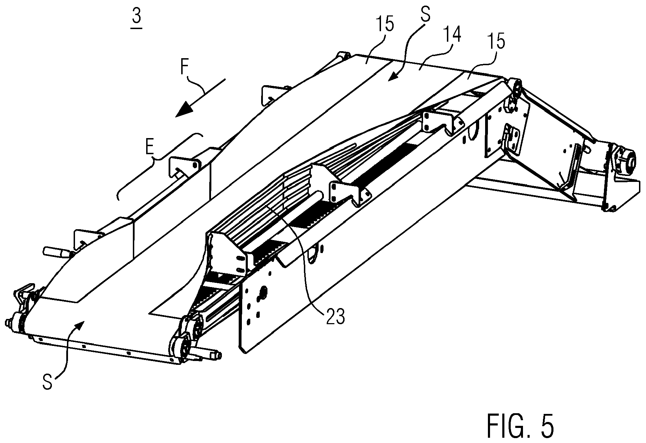

In Figur 5 ist eine perspektivische Ansicht der Fördervorrichtung 3 dargestellt. Nun ist erkennbar, dass die Fördervorrichtung 3 eine Bandführung 23 aufweisen kann. Die Bandführung 23 kann dazu konfiguriert sein, die seitlichen Abschnitte 15 des Förderbands 9 relativ zu dem mittleren Abschnitt 14 in Richtung hin zur Dosiervorrichtung 2 zu biegen und oder zu klappen. Dabei können die seitlichen Abschnitte 15 an einem in Förderrichtung F gesehen stromaufwärtsseitigen Ende der Fördervorrichtung 3 zunächst in einer Anfangsstellung S angeordnet sein. Insbesondere können die seitlichen Abschnitte in der Anfangsstellung S im Wesentlichen parallel zu und oder komplanar mit dem mittleren Abschnitt 14 orientiert sein. Die seitlichen Abschnitte 15 können dann durch Eingreifen der Bandführung 23 mit einer Unterseite des Förderbandes 9, insbesondere einer Unterseite der seitlichen Abschnitte 15, bis hin zu einer Endstellung E gebogen und oder geklappt werden. Danach können die seitlichen Abschnitte 15 durch nachlassenden oder abwesenden Eingriff der Bandführung 23 sowie durch Rückstellkräfte des Förderbandes 9 in die Anfangsstellung S zurückkehren. Es ist bevorzugt, dass der Bereich, in dem die seitlichen Abschnitte 15 in der Endstellung E angeordnet sind, stromabwärts von der Dosiervorrichtung 2 angeordnet ist. Dadurch kann beispielsweise der Randabstand 17 im Wesentlichen konstant gehalten werden.

Unter Bezugnahme auf Figur 1 soll im Folgenden grob eine mögliche Funktionsweise der beschriebenen Teigportioniervorrichtung 1 erläutert werden. In Förderrichtung F noch vor der Dosiervorrichtung 2 kann eine erste Trennmittelaufbringvorrichtung 22 angeordnet sein. Die Trennmittelaufbringvorrichtung 22 kann dazu konfiguriert sein, Trennmittel auf das Förderband 9 aufzutragen. Dies kann vorzugsweise in einem Bereich geschehen, in dem die seitlichen Abschnitte 15 noch in der Anfangsstellung S angeordnet sind. Dadurch kann das Auftragen des Trennmittels auf die seitlichen Abschnitte 15 erleichtert werden.

Im Bereich der Dosiervorrichtung 2 kann dann mit dem Biegen und oder Klappen der seitlichen Abschnitte 15 durch die Bandführung 23 begonnen werden. In demselben Bereich kann durch die Dosiervorrichtung 2 eine Teigmenge 7 an dem Auslassende 8 der Dosiervorrichtung 2 ausgelassen und auf dem Förderband 9 abgelegt werden. Wie im vorliegenden Ausführungsbeispiel zu erkennen, können die Teigmengen 7 dabei überlappend abgelegt werden, insbesondere derart, dass jede Teigmenge 7 ein überlappendes Teilstück 7a und ein abgedecktes Teilstück 7 B aufweisen kann. Ein Fachmann erkennt, dass die Fallhöhen der Teilstücke 7a, 7b aus der Dosiervorrichtung 2 bei paralleler Orientierung des Auslassendes 8 und des Förderbands 9 unterschiedlich wären. Insbesondere wäre dann die Fallhöhe eines überlappenden Teilstücks 7a auf ein abgedecktes Teilstück 7b der vorherigen Teigmenge 7 geringer als eine Fallhöhe des abgedeckten Teilstücks 7b auf das Förderband 9.

Bei der vorliegend offenbarten Teigportioniervorrichtung kann der Unterschied zwischen den Fallhöhen ausgeglichen werden, nämlich dadurch, dass der mittlere Abschnitt 14 relativ zu dem Auslassende 8 der Dosiervorrichtung 2 ein Gefälle 19 aufweist. Nach dem Ablegen können die überlappenden Teilmengen durch eine Formwalze 24 in das muldenartig geformte Förderband 9 gedrückt werden, um dem entstehenden Teigband eine definierte Form zu geben. Dabei kann durch eine zweite Trennmittelaufbringvorrichtung 25 ein Trennmittel auf die Formwalze 24 aufgetragen werden. Danach können die seitlichen Abschnitte 15 durch Rückstellkräfte des Förderbands 9 wieder in die Anfangsstellung geklappt werden und das entstehende Teigband 26 an ein Walzensystem 27 übergeben werden.

Besonders günstig ist es, wenn der Unterschied zwischen dem stromaufwärtigen Abstand 20 und dem stromabwärtigen Abstand 21 basierend auf einer zu erwartenden Dicke 28 der Teigmenge 7 eingestellt wird. Besonders bevorzugt kann der Unterschied zwischen dem stromaufwärtigen Abstand 20 und dem stromabwärtigen Abstand 21 im Wesentlichen der Dicke 28 der Teigmenge 7 entsprechen.

## Patentansprüche

1. Teigportioniervorrichtung (1), umfassend:
eine Dosiervorrichtung (2) mit einem Behälter (4), der zum Aufnehmen eines Teigvorrats (5) konfiguriert ist, und einem Teiler (6), der zum Abtrennen einer definierten Teigmenge (7) aus dem Teigvorrat (5) und zum Auslassen der Teigmenge (7) an einem Auslassende (8) der Dosiervorrichtung (2) in einer Auslassrichtung (A) konfiguriert ist,
eine Fördervorrichtung (3), die zum Transportieren von Teig in einer Förderrichtung (F) konfiguriert ist, ein Förderband (9) umfasst und unterhalb des Auslassendes (8) der Dosiervorrichtung (2) angeordnet ist, wobei das Auslassende (8) sich in der Förderrichtung (F) über eine Auslasslänge (12) von einem stromaufwärtsseitigen Abschnitt (10) zu einem stromabwärtsseitigen Abschnitt (11) erstreckt, wobei die Fördervorrichtung (3) des Weiteren eine Bandführung (23) aufweist, die dazu konfiguriert ist, seitliche Abschnitte (15) des Förderbandes (9) relativ zu einem mittleren Abschnitt (14) in Richtung hin zur Dosiervorrichtung (2) zu biegen/klappen,
wobei der mittlere Abschnitt (14) des Förderbands (9) zumindest in einem Abschnitt im Bereich der Dosiervorrichtung (2) relativ zu dem Auslassende (8) der Dosiervorrichtung (2) ein Gefälle (19) aufweist.

2. Teigportioniervorrichtung nach Anspruch 1, wobei das Auslassende (8) im Wesentlichen horizontal orientiert ist.

3. Teigportioniervorrichtung nach einem der vorhergehenden Ansprüche, wobei der mittlere Abschnitt (14) einen entlang der Förderrichtung (F) veränderlichen in Auslassrichtung (A) gemessenen Abstand (18) von dem Auslassende (8) aufweist.

4. Teigportioniervorrichtung nach einem der vorhergehenden Ansprüche, wobei seitliche Ränder (16) der seitlichen Abschnitte (15) jeweils einen entlang der Förderrichtung (F) im Wesentlichen konstanten in der Auslassrichtung gemessenen Randabstand (17) von dem Auslassende (8) aufweisen.

5. Teigportioniervorrichtung nach einem der vorhergehenden Ansprüche, wobei ein in der Auslassrichtung (A) gemessener stromaufwärtiger Abstand (20) des mittleren Abschnitts (14) von dem stromaufwärtsseitigen Abschnitt (10) des Auslassendes (8) kleiner ist als ein in der Auslassrichtung (A) gemessener stromabwärtiger Abstand (21) des mittleren Abschnitts (14) von dem stromabwärtsseitigen Abschnitt (11) des Auslassendes (8).

6. Teigportioniervorrichtung nach Anspruch 5, wobei eine Differenz zwischen dem stromaufwärtigen Abstand (20) und dem stromabwärtigen Abstand (21) basierend auf einer Dicke (28) der auf dem mittleren Abschnitt (14) liegenden ausgelassenen Teigmenge (7) eingestellt ist.

7. Teigportioniervorrichtung nach Anspruch 5 oder 6, wobei eine Differenz zwischen dem stromaufwärtigen Abstand (20) und dem stromabwärtigen Abstand (21) im Wesentlichen einer Dicke (28) der auf dem mittleren Abschnitt (14) liegenden ausgelassenen Teigmenge (7) entspricht.

8. Teigportioniervorrichtung nach einem der vorhergehenden Ansprüche, wobei die seitlichen Abschnitte (15) des Förderbands (9) von einer Anfangsstellung (S) in eine Endstellung (E) klappbar sind und die Teigportioniervorrichtung (1) derart konfiguriert ist, dass die seitlichen Abschnitte (15) entlang der Auslasslänge (12) des Auslassendes (8) von der Anfangsstellung (S) in die Endstellung (E) gebogen/geklappt werden.

## Claims

1. Dough portioning device (1) comprising:
a metering device (2) with a container (4) which is configured to receive a supply (5) of dough, and a separator (6) which is configured to separate a defined quantity (7) of dough from said supply (5) of dough and to discharge said quantity of dough (7) at a discharge end (8) of said metering device (2) in a discharge direction (A),
a conveyor device (3) which is configured to transport dough in a conveying direction (F), comprises a conveyor belt (9), and is arranged below said discharge end (8) of said metering device (2), wherein said discharge end (8) extends in said conveying direction (F) over a discharge length (12) from a section (10) on the upstream side to a section (11) on the downstream side, wherein said conveyor device (3) further comprises a belt guide (23) which is configured to bend/fold lateral sections (15) of said conveyor belt (9) relative to a middle section (14) in the direction towards said metering device (2),
wherein said middle section (14) of said conveyor belt (9) has a declivity (19) relative to said discharge end (8) of said metering device (2), at least in a section in the region of said metering device (2).

2. Dough portioning device according to claim 1, wherein said discharge end (8) is oriented to be substantially horizontal.

3. Dough portioning device according to one of the preceding claims, wherein said middle section (14) has a distance (18) from said discharge end (8) which, when measured in said discharge direction (A), is variable along said conveying direction (F).

4. Dough portioning device according to one of the preceding claims, wherein lateral edges (16) of said lateral sections (15) each have an edge distance (17) from said discharge end (8) that is measured in said discharge direction and is substantially constant along said conveying direction (F).

5. Dough portioning device according to one of the preceding claims, wherein an upstream distance (20) of said middle section (14), measured in said discharge direction (A), from said section (10) of said discharge end (8) on the upstream side is smaller than a distance (21) of said middle section (14), measured in said discharge direction (A), from said section (11) of said discharge end (8) on the downstream side.

6. Dough portioning device according to claim 5, wherein a difference between said distance (20) on the upstream side and said distance (21) on the downstream side is set based on a thickness (28) of said quantity of dough (7) discharged and lying on said middle section (14).

7. Dough portioning device according to claim 5 or 6, wherein a difference between said distance (20) on the upstream side and said distance (21) on the downstream side corresponds substantially to a thickness (28) of said quantity of dough (7) discharged and lying on side middle section (14).

8. Dough portioning device according to one of the preceding claims, wherein said lateral sections (15) of said conveyor belt (9) are foldable from an initial position (S) to an end position (E), and said dough portioning device (1) is configured such that said lateral sections (15) are bent/folded along said discharge length (12) of said discharge end (8) from said initial position (S) to said end position (E).

## Revendications

1. Dispositif de portionnement de pâte (1), comprenant :
un dispositif de dosage (2) comprenant un récipient (4) configuré pour recevoir une réserve de pâte (5) et un diviseur (6) configuré pour séparer une quantité définie de pâte (7) de la réserve de pâte (5) et pour évacuer la quantité de pâte (7) à une extrémité de sortie (8) du dispositif de dosage (2) dans une direction de sortie (A),
un dispositif de transport (3) configuré pour transporter de la pâte dans une direction de transport (F), comprenant une bande transporteuse (9) et disposé en dessous de l'extrémité de sortie (8) du dispositif de dosage (2), l'extrémité de sortie (8) s'étendant dans la direction de transport (F) sur une longueur de sortie (12) depuis une partie amont (10) vers une partie aval (11), dans lequel le dispositif de transport (3) comprend en outre un guide de bande (23) configuré pour plier/rabattre des parties latérales (15) de la bande transporteuse (9) par rapport à une partie centrale (14) en direction du dispositif de dosage (2),
dans lequel la section centrale (14) de la bande transporteuse (9) présente une pente (19) au moins dans une section dans la zone du dispositif de dosage (2) par rapport à l'extrémité de sortie (8) du dispositif de dosage (2).

2. Dispositif de portionnement de pâte selon la revendication 1, dans lequel l'extrémité de sortie (8) est orientée sensiblement horizontalement.

3. Dispositif de portionnement de pâte selon l'une des revendications précédentes, dans lequel la portion centrale (14) présente une distance (18), variable le long de la direction de transport (F), mesurée dans la direction de sortie (A), par rapport à l'extrémité de sortie (8).

4. Dispositif de portionnement de pâte selon l'une quelconque des revendications précédentes, dans lequel des bords latéraux (16) des parties latérales (15) présentent chacun une distance de bord (17), mesurée dans la direction de sortie, sensiblement constante le long de la direction de transport (F), par rapport à l'extrémité de sortie (8).

5. Dispositif de portionnement de pâte selon l'une quelconque des revendications précédentes, dans lequel une distance amont (20) de la partie centrale (14) par rapport à la partie amont (10) de l'extrémité de sortie (8), mesurée dans la direction de sortie (A), est inférieure à une distance aval (21) de la partie centrale (14) par rapport à la partie aval (11) de l'extrémité de sortie (8), mesurée dans la direction de sortie (A).

6. Dispositif de portionnement de pâte selon la revendication 5, dans lequel une différence entre l'espacement amont (20) et l'espacement aval (21) est réglée sur la base d'une épaisseur (28) de la quantité de pâte cuite (7) reposant sur la section centrale (14).

7. Dispositif de portionnement de pâte selon la revendication 5 ou 6, dans lequel une différence entre l'espacement amont (20) et l'espacement aval (21) correspond sensiblement à une épaisseur (28) de la quantité de pâte cuite (7) reposant sur la section centrale (14).

8. Dispositif de portionnement de pâte selon l'une quelconque des revendications précédentes, dans lequel les parties latérales (15) de la bande transporteuse (9) peuvent être repliées depuis une position initiale (S) jusqu'à une position finale (E) et le dispositif de portionnement de pâte (1) est configuré de telle sorte que les parties latérales (15) sont pliées/rabattues le long de la longueur de sortie (12) de l'extrémité de sortie (8) de la position initiale (S) jusqu'à la position finale (E).
